# EUROPEAN PATENT SPECIFICATION

(11) **EP 3 853 012 B1**
(45) Date of publication and mention of the grant of the patent: **30.08.2023**
(21) Application number: 19839656.6
(22) Date of filing: 19.09.2019
(51) Int. Cl.: B29D 23/00, B29C 45/00, B29C 45/14, B29L 23/00, F16L 9/147, F16L 59/14, B29K 75/00, B29K 705/00

(54) **METHOD OF MANUFACTURING A PIPELINE COATED WITH A THERMOSET MATERIAL AND APPARATUS THEREFOR**
VERFAHREN ZUR HERSTELLUNG EINER MIT EINEM DUROPLAST BESCHICHTETEN PIPELINE UND VORRICHTUNG DAFÜR
PROCÉDÉ DE FABRICATION D'UN PIPELINE REVÊTU D'UN MATÉRIAU THERMODURCISSABLE ET APPAREIL ASSOCIÉ

(30) Priority: 19.09.2018 GB 201815245
(43) Date of publication of application: 28.07.2021
(73) Proprietor: Technip France, 92400 Courbevoie (FR)
(72) Inventor: WHIGHAM, Michael, Aberdeenshire AB32 7EQ (GB)
(74) Representative: Murgitroyd & Company
(86) International application number: PCT/IB2019/001280
(87) International publication number: WO 2020/058769

(56) References cited:
- EP-A2- 2 835 570
- US-A1- 2010 193 990
- US-A1- 2015 285 409

## Description

This invention relates to a method of manufacturing a pipeline for subsea transportation of oil and gas. The accompanying description further relates to a pipeline being coated with a thermoset material, as well as to an apparatus for carrying out such a method.

### Background

During the subsea transport of oil and gas within steel pipes, the temperature in the pipe bore may decrease due to the low temperature of the surrounding seawater. The combination of a low temperature within the pipe bore, high pressure and the composition of the oil and gas being transported, may result in the formation of wax and/or hydrates which can plug the pipe bore. If a pipeline becomes plugged with hydrates and/or wax deposits, oil and gas cannot be transported along the pipeline until an unplugging procedure is carried out which is expensive as production is on hold. In addition, unplugging the pipeline is generally difficult and dangerous due to pressure build-up within the pipeline. In addition, unplugging can be costly because it involves additional equipment and operators.

One way of mitigating the formation of hydrates and/or wax is to thermally insulate the steel pipe to maintain the temperature of the pipe bore above the temperature at which hydrates and/or wax are formed. Such a thermally insulated pipe may comprise:
(a) an internal steel pipe for transporting oil and gas;
(b) an external steel pipe ("carrier pipe") which surrounds the internal steel pipe; and
(c) an annular space between the internal steel pipe and the external steel pipe for thermally insulating the internal steel pipe.

To improve the efficiency of this solution, electrical cables may be located around the internal steel pipe in the annular space in order to heat the oil and gas being transported and prevent formation of hydrates and/or wax. However, a disadvantage of this approach is that the additional external steel pipe increases the overall weight of the pipeline, meaning that installation of the pipeline in deep water can be more difficult.

To alleviate the above drawback, WO 2017/068135 A1 describes a further insulated pipeline which has been developed. This pipeline comprises:
(a) an internal steel pipe for transporting oil and gas;
(b) a polymeric insulation cover which is in contact with the surrounding seawater and
(c) several electrical cables located around the internal steel pipe for heating the oil and gas being transported.

Another pipeline manufacturing technology is disclosed in US2015/285409 A1.

The polymeric insulation cover comprises a superposition of a plurality of shells arranged circumferentially around the internal steel pipe. The shells may be made of polypropylene or polyethylene. Although an external sheath is located around the insulation cover in order to maintain the shells, during installation the shells may move and affect the insulation of the pipeline. In addition, the steps of the manufacturing process are time-consuming because each shell of the insulation cover needs to be installed individually.

There is therefore a need to provide an improved method of manufacturing a pipeline suitable for transporting oil and gas subsea, as well as an apparatus for manufacturing the pipeline.

### Statement of invention

According to the invention, there is provided a method of manufacturing a pipeline according to claim 1.

Furthermore there is provided an apparatus for carrying out a method of manufacturing a pipeline for subsea transportation of oil and gas, the apparatus comprising:
(a) a support for holding a metallic pipe, the metallic pipe having an external surface, and optionally having an intermediate layer formed on its external surface,
(b) a cable application machine for laying a plurality of electrical cables on the external surface of the metallic pipe or on the intermediate layer when present, and
(c) a coating applicator for coating a section of the metallic pipe with a thermoset material.

### Brief description of the drawings

This invention will be further described by reference to the following Figures which are not intended to limit the scope of the invention claimed, in which:
**Figure 1** shows a perspective cutaway view of a pipeline manufactured according to the method of the invention,
**Figure 2** shows the apparatus for manufacturing the pipeline of Figure 1, an uncoated section of pipe being adjacent to a mould,
**Figure 3** shows the apparatus with the mould moved in and enclosing the uncoated pipe,
**Figure 4** shows the apparatus with an end ring fitted at a second end of the uncoated pipe,
**Figure 5** shows the end ring in isolation in an open position,
**Figure 6** shows an enlarged view of a first end of the pipe section of Figure 4,
**Figure 7** shows the apparatus with the mould closed around the section of pipe being coated, the thermoset material being injected into the mould,
**Figure 8** shows the mould in a closed position, as well as the trolley and rails on which the mould is mounted,
**Figure 9** shows a perspective view of the pipe conveyor, and
**Figure 10** shows a perspective view of a single pipe contacting pad of the pipe conveyor.

### Detailed description

In the method and apparatus, the metallic pipe may be a steel pipe.

In the method of the invention, step (c) may be repeated in order to coat a plurality of sections of the metallic pipe with the thermoset material.

In the method of the invention, step (b) may additionally comprise applying a second coating of thermoset material to the coated section of the metallic pipe. Subsequent coatings of thermoset material (ie third, fourth, fifth, etc) may be applied as required. The thermoset material of the second coating may be the same as or different to the thermoset material of the first coating. The thermoset material of subsequent coatings may be the same as or different to the thermoset material of the first and second coatings. This enables the application of different thermoset materials for the coating. Preferably, the thermoset material of the first coating has a Shore hardness superior to the Shore hardness of the thermoset material of the second coating. Such embodiment can assist in providing flexibility of the coating during bending of the pipe while sustaining loads to which the pipe may be subjected.

In some embodiments, the plurality of electrical cables may be wound helically around the external surface of the metallic pipe or the intermediate layer when present.

In some embodiments, the metallic pipe has an intermediate layer formed on its external surface and the plurality of electrical cables is located on the intermediate layer.

In some embodiments, the metallic pipe may have an optical fibre located on its external surface or on the intermediate layer when present.

In some embodiments, the plurality of electrical cables (and optical fibre when present) may be at least partially enclosed by a protective layer. The protective layer may be used to protect the electrical cables from the risk of damage by external efforts that can be transmitted to the cables. These external efforts are loads generated during fabrication, installation (crushing, tensioning, bending or reeling phases) and during in place phases of the pipeline. Compression, lateral or axial stress can provoke electrical cable damages. The protective layer allows lateral movement of the electrical cables. In some embodiments, the protective layer is not applied between the plurality of electrical cables and the external surface of the metallic pipe or the intermediate layer when present. This is in order to prevent losses in the thermal transfer between the plurality of electrical cables and the metallic pipe or intermediate layer. In some embodiments, the protective layer encloses the plurality of electrical cables apart from between the cables and the metallic pipe or the intermediate layer when present.

There are various embodiments of the protective layer, some of which are set out below. The embodiments may be taken alone or in combination if possible.
(i) The protective layer may comprise a metal or plastic. This would be in the form of a hard, thin layer. In particular, the plurality of electrical cables may be provided with a space (e.g. an air gap) between them and the protective layer.
(ii) The protective layer may comprise a compressible material. The compressible material may be selected such that it does not melt or absorb the thermoset material. In some embodiments, the compressible material is a foam, for example silicon foam or EPDM rubber. In particular, the compressible material may surround and be in contact with the plurality of electrical cables.
(iii) The protective layer may comprise a material which is removable after application of the thermoset material. The protective layer can be removed mechanically, for example by pulling it from one extremity. In this way, once the material has been removed, the plurality of electrical cables may be provided with a space (e.g. an air gap) between them and the thermoset material.
(iv) The protective layer may be in the form of a tube (or conduit) which surrounds the plurality of electrical cables. In this embodiment, there would be a wall of the tube between the plurality of electrical cables and the external surface of the metallic pipe or the intermediate layer when present.
(v) The protective layer may comprise a compressible material upon which is provided a substantially waterproof layer.

In particular, step (a) may comprise providing a metallic pipe having an external surface, optionally having an intermediate layer formed on the external surface, and laying a plurality of electrical cables and optionally an optical fibre on the external surface or on the intermediate layer when present. More particularly, step (a) may comprise providing a metallic pipe having an external surface, optionally having an intermediate layer formed on the external surface, and winding a plurality of electrical cables and optionally an optical fibre helically around the external surface of the pipe or the intermediate layer when present. In particular, step (a) may comprise applying an intermediate layer to the external surface of the pipe prior to winding the plurality of electrical cables and optional optical fibre. In some embodiments, the plurality of electrical cables (and optical fibre when present) may be provided with a protective layer as described above. In some embodiments, step (a) may comprise, after laying on or winding around the plurality of electrical cables (and optical fibre when present), applying a protective layer as described above to the plurality of electrical cables. Alternatively, before step (a), a protective layer may be applied around the electrical cables and then, in step (a) the electrical cables and the protective layer may be laid on the external surface or on the intermediate layer. In some embodiments, the plurality of electrical cables and the protective layer may be wound helically around the external surface of the metallic pipe or the intermediate layer when present.

In particular, the intermediate layer may be an anti-corrosion layer. More particularly, the anti-corrosion layer may comprise an epoxy or polypropylene based material. The anti-corrosion layer can also comprise other materials known in the art for this purpose. More particularly, the anti-corrosion layer may comprise a first layer formed of an epoxy based material, which may optionally be surrounded by one or more of an adhesive layer and a plurality of layers formed of polypropylene or polyethylene material. In particular, the thickness of the anti-corrosion layer may be of 0.2 mm to 5 mm.

Step (b) comprises providing a mould for applying the thermoset material, closing the mould around the section of metallic pipe to be coated, and injecting the thermoset material into the mould to coat the section of metallic pipe with the thermoset material. More particularly, step (b) may additionally comprise, after injecting the thermoset material into the mould, removing the mould, moving the coated section of metallic pipe longitudinally with respect to the mould, and then repeating step (b) on a further section of metallic pipe to be coated.

In particular, step (b) may additionally comprise, after injecting the thermoset material into the mould, curing the thermoset material. More particularly, the curing may comprise heating the thermoset material.

When the mould is closed around the section of metallic pipe to be coated, the mould may comprise first and second open ends which surround the metallic pipe, and substantial sealing of the open ends is either provided by a previously coated section of metallic pipe or a seal placed around the metallic pipe. More particularly, substantial sealing may be provided at a first end by a section of metallic pipe to which the thermoset coating has already been applied and at a second end by a sealing ring placed around the metallic pipe. In this context, substantial sealing may be used to mean sealing to the extent necessary to prevent leaking of the thermoset material.

In some embodiments, when the plurality of electrical cables are provided with a protective layer, and that layer is removable, the method may comprise, after step (b) and/or step (c), the step of removing the protective layer.

In some embodiments, the metallic pipe may have a length greater than 12 metres. In some embodiments, the metallic pipe may have a length greater than 24 metres.

In particular, the thermoset material may be a polyurethane.

In the apparatus of the invention, the apparatus may be for carrying out a method as described above.

In some embodiments, the support may comprise a pipe conveyor.

In some embodiments, the cable application machine may be for winding the plurality of electrical cables and optionally an optical fibre helically around the external surface of the pipe or the intermediate layer when present.

In some embodiment, the cable application machine may be for laying on or winding around a plurality of electrical cables (and optical fibre when present) comprising a protective layer as described above. In some embodiments, the cable application machine may be for laying on or winding around a plurality of electrical cables (and optical fibre when present) and then applying a protective layer as described above to the plurality of electrical cables.

In some embodiments, the coating applicator may comprise a mould for the thermoset material. In particular, the mould may comprise multiple sections which are capable of enclosing the section of the metallic pipe to be coated. In particular, the mould may comprise two jaws which are closable around the section of the metallic pipe to be coated. More particularly, the mould may be shaped such that, in use and closed around the section of the metallic pipe to be coated, it forms a substantially cylindrical void between the mould and the section of the metallic pipe to be coated.

In particular, the mould may comprise one or more inlets for supplying the thermoset material to the mould. More particularly, the mould may comprise one or more outlets for allowing air to escape from the mould when the thermoset material is supplied to the mould.

In particular, the mould may comprise one or more heaters for curing the thermoset material.

In some embodiments, the mould may be mounted on a frame (or trolley) such that the mould is moveable with respect to the section of the metallic pipe to be coated.

In some embodiments, the mould may comprise first and second open ends which, in use, surround the metallic pipe, and the apparatus further comprises a removable sealing ring for placing around the metallic pipe in order to seal at least one of the first and second open ends. In particular, the sealing ring may comprise a hinge and a closable opening such that the sealing ring can be opened for attachment to and removal from the metallic pipe. More particularly, the sealing ring may have an internal, metallic pipe facing, surface in which are formed grooves which are shaped to accept the plurality of electrical cables on the external surface of the metallic pipe or on the intermediate layer when present.

In some embodiments, the apparatus may additionally comprise a pump for supplying the thermoset material to the mould.

In some embodiments, the apparatus may additionally comprise a second coating applicator for coating a section of the metallic pipe with an intermediate layer prior to coating with the thermoset material.

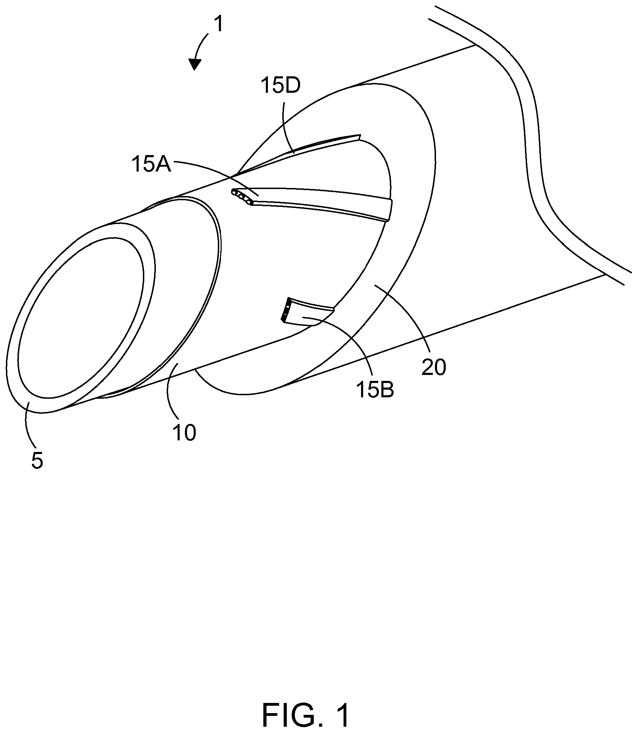

Figure 1 shows a perspective cutaway view of a pipeline 1 produced according to one embodiment of the method of the invention. Starting centrally and working outwards, the pipeline 1 comprises a central metallic pipe 5 upon which is applied an anti-corrosion layer 10. Four electrical cables 15A, 15B, 15C and 15D (not all of which are visible in Figure 1) are wound helically around the anti-corrosion layer 10. The cables 15A, 15B, 15C and 15D provide heating to the pipeline in order to maintain the temperature of oil and gas transported inside the pipeline above the temperature of formation of hydrates and wax at a specific pressure. Finally, an outer coating 20 of a thermoset polymer such as polyurethane is then provided around the anti-corrosion layer 10 and cables 15A, 15B, 15C and 15D.

The metallic pipe 5 is configured to provide resistance to external and internal pressure. The metallic pipe 5 is formed from a material selected from carbon steel, a corrosion resistant alloy or any other suitable material. The metallic pipe 5 comprises a plurality of pipe sections assembled together. For example, each pipe section is welded to an adjacent pipe section to form the metallic pipe 5 prior to coating the section of the metallic pipe 5. This avoids the need for field joint coating, which consists of reassembling the coating at the ends of two adjacent pipe sections that have been welded together to form the pipe 5. This can result in a more robust coating, whilst also providing a time saving.

The length of the metallic pipe 5 is greater than 12 metres and preferably greater than 24 metres. Preferably, the internal diameter of the metallic pipe 5 is from 10 cm to 70 cm. Preferably, the thickness of the wall of the metallic pipe 5 is from 5 mm to 50 mm. The metallic pipe 5 is formed of a material selected from a group consisting of carbon steel, a corrosion resistant alloy or any other suitable material.

The anti-corrosion layer 10 comprises a material selected from an epoxy or polypropylene based material, and any other suitable material as described above. The anti-corrosion layer 10 may be applied by brush, sponge, spray, powder coating, sintering, extrusion, wrapping, moulding or other well-known method.

Optionally, the pipeline 1 may comprise an internal liner (not shown) inside the metallic pipe 5 to protect the internal surface of the metallic pipe 5 from corrosion during transport of oil and gas. The internal liner may be a polymeric liner or a metallic liner. The inner liner may be bonded to the inner surface of the metallic pipe 5. The thickness of the internal liner is preferably from 0.5 mm to 50 mm.

Typically, the electrical cables 15A, 15B, 15C and 15D are medium/high voltage cables comprising at least an inner electrical conductor and an outer electrical insulation layer surrounding the inner electrical conductor. Medium and high voltage designates a voltage higher than 600 V. Generally, medium voltage designates a voltage of between 10 kV and 30 kV, and high voltage designates a voltage greater than 50 kV.

Typically, the inner electrical conductor is made of an electrical conductive material such as a metal. The metal may be selected from the group consisting of copper, aluminum, silver, gold, platinum, nickel, steel or any other suitable metallic material. Typically, the inner electrical conductor comprises a single metal core. Alternatively, the inner electrical conductor may comprise a plurality of metallic wires, the plurality of metallic wires preferably being twisted. Generally, the inner electrical conductor has a substantially circular cross-section. The inner electrical conductor may have a cross-section area of between 1 mm² and 1600 mm².

Typically, the outer electrical insulation layer is made of a polymeric material. The polymeric material may be selected from the group consisting of fluoropolymers, polyolefins, polyamides or any suitable material.

Typically, each of the electrical cables 15A, 15B, 15C and 15D comprise three electrical conductors, each electrical conductor being surrounded by an outer electrical insulation layer. Preferably, the bundle of three electrical conductors is enclosed by a polymeric sheath to maintain the electrical conductors. The electrical cables may be wound with a helix angle in the range 10° to 30° and preferably about 15°. Alternatively, an optical fibre may be located between the electrical cables 15A, 15B, 15C and/or 15D. The optical fibre may also be wound with a helix angle in the range 10° to 30° and preferably about 15°.

In an alternative embodiment, each of the electrical cables 15A, 15B, 15C and 15D may comprise two electrical conductors, each electrical conductor being surrounded by an outer electrical insulation layer

The outer coating 20 is formed of a thermoset material. The thermoset material may have a gel time of 2 minutes to 10 minutes. Gel time is measured according to ISO 8130. Curing of the thermoset material is generally promoted by a catalyst as well known in the art. The thermoset material may be polyurethane. Polyurethane is a polymer formed by reacting a polyol with a di- or tri- poly-isocyanate. The thermoset material may have an elongation at break of 15% to 300%. Preferably, the thermoset material has a tensile strength measured at 23°C of 10 MPa to 40 MPa. Preferably, the thermoset material has a hardness of 95 Shore A to 80 Shore D. Preferably the density of the thermoset material is 900 kg/m³ to 1300 kg/m³. Preferably the thermal conductivity of the thermoset material is 0.1 W/mK to 0.2 W/mK, and more preferably the thermal conductivity of the thermoset material is 0.14 W/mK to 0.19 W/mK.

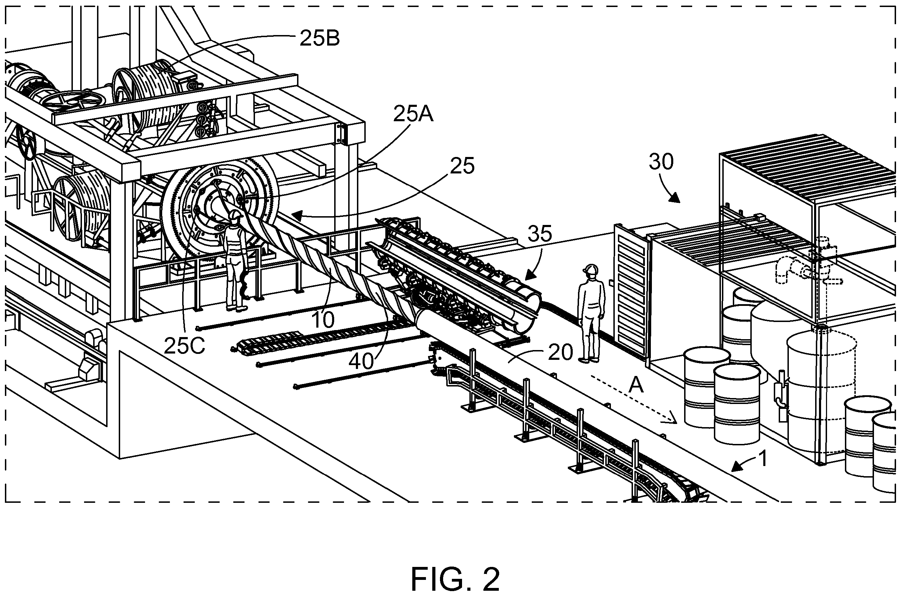

The method of manufacturing the pipeline 1 is then shown in Figures 2-4 and 6-7. To improve clarity, not all of the components used in the method are labelled in all Figures. However, the same components are present throughout.

As shown in Figure 2, the central metallic pipe 5 (not visible) with its anti-corrosion layer 10 already formed thereon is provided through Cable Application Machine (CAM) 25 which winds cables 15A, 15B, 15C and 15D (not labelled in Figures 2-4 and 6-7) helically around the anti-corrosion layer 10. The CAM 25 comprises a rotor 25A and at least one spool 25B of electrical cables. The rotor 25A comprises a central axis for the passage of the central metallic pipe 5. The rotor 25A may comprise several orifices (for example, 25C) to enable the passage of the electrical cables from the spool(s) 25B to the pipeline 1. The rotor 25A comprises a motor (not shown) for driving into rotation the rotor 25A to enable winding of the electrical cables in a spiral around the pipeline 1. Preferably, the CAM 25 comprises a plurality of spools 25B. Optionally, the spools 25B are driven in rotation around their axis, for example by an electric motor. The cable application machine applies the electrical cables with a tension that ensures that the said electrical cables are sit tightly on the external surface of the central metallic pipe 5 or the anti-corrosion layer 10. A section of pipeline 1 to which outer coating 20 has already been applied is also shown. The direction of travel of the pipeline during manufacture is shown by arrow A. Equipment 30 for processing the thermoset material for outer coating 20 is provided adjacent to the pipeline 1.

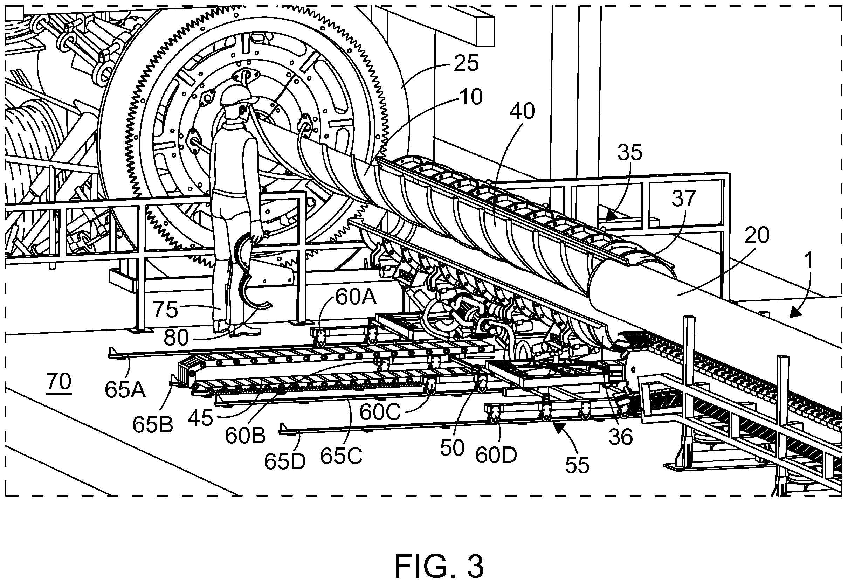

Mould 35 for forming the outer coating 20 is provided adjacent to a section of pipe 40 to which the coating 20 is to be applied. As shown in Figures 3, 4 and 6-7, mould 35 comprises opposing heated lower and upper jaws 36, 37 which are shown in an open position. Opposing heated lower 36 and upper 37 jaws are closable around the uncoated section of pipe 40 in order to form a tubular void (not shown) into which the thermoset material can be injected.

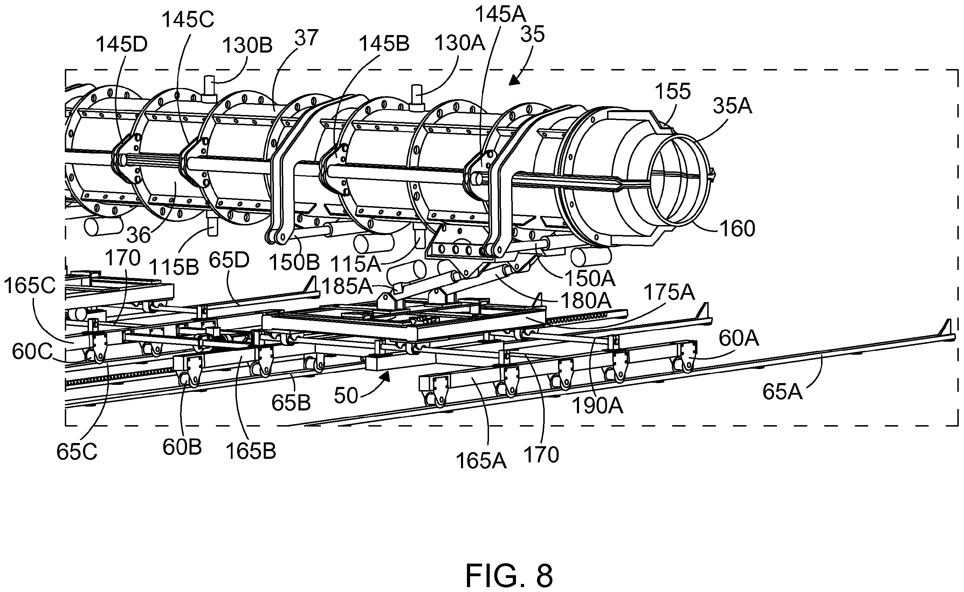

As depicted in Figure 3, mould 35 is mounted on a trolley 50 which is fixed to powered cat track 45 which extends in a direction perpendicular to the major axis of pipeline 1. In this way, the mould 35 can be moved towards and away from the section of pipe 40 both before and after coating 20 is applied. Trolley 50 is also provided with wheels 55 which are mounted in four rows 60A, 60B, 60C and 60D. Each row of wheels 60A, 60B, 60C and 60D engages a respective rail 65A, 65B, 65C and 65D provided in the floor 70 beneath the trolley 50. The movement of trolley 50 is thereby defined by rails 65A, 65B, 65C and 65D. As shown in detail in Figure 8, which is described below, the vertical position of the mould 35 (ie the distance from floor 70) can also be adjusted.

Figure 3 shows a zoomed in view of the mould 35 when lower and upper jaws 36, 37 are in the process of closing around the uncoated section of pipe 40. Operator 75 is depicted holding hinged end ring 80 in an open position.

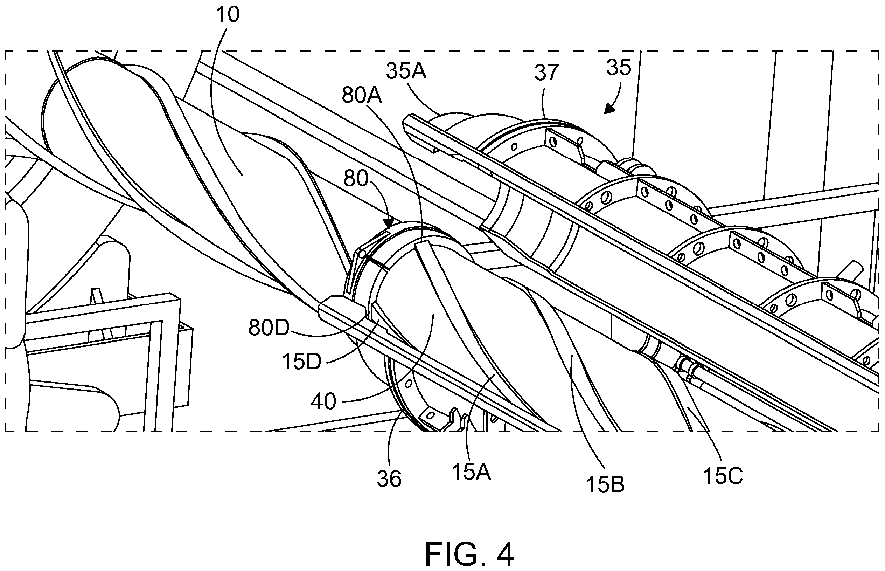

As shown in Figure 3, mould 35 has a first end 35A which is adjacent to the uncoated section of pipe 40, and a second end 35B which is adjacent to a section of pipeline 1 to which outer coating 20 has previously been applied. As shown in Figure 4, hinged end ring 80 has been secured in a closed position around the uncoated section of pipe 40 at a position adjacent to the first end 35A of mould 35. The first end 35A of mould 35 is shaped such that it closely fits around hinged end ring 80 in order to provide a seal. Similarly, although not shown in Figure 4, the second end 35B of mould 35 is shaped such that it closely fits around the previously coated section of pipeline 1 in order to provide a seal. Preferably, the second end 35B of mould 35 provides an overlapping with the previously coated section of pipeline 1 of at least 10 mm as measured along the axis of the pipeline 1 and more preferably of 10 mm to 100 mm as measured along the axis of the pipeline 1 and even more preferably of 10 mm to 50 mm as measured along the axis of the pipeline 1. This helps to ensure an efficient sealing of the mould 35 around the pipeline 1 during coating. The overlaps of the coating between two adjacent section of pipeline 1 ensures integrity of the coating during reeling of the pipeline 1 as part of pipe laying. Preferably the thickness of the overlapped coated section is equal or greater than 10 mm and more preferably of 10 mm to 50 mm. Hinged end ring 80 is provided with four internal slots 80A, 80B, 80C and 80D (not all of which are visible in Figure 4) which fit around the cables 15A, 15B, 15C and 15D.

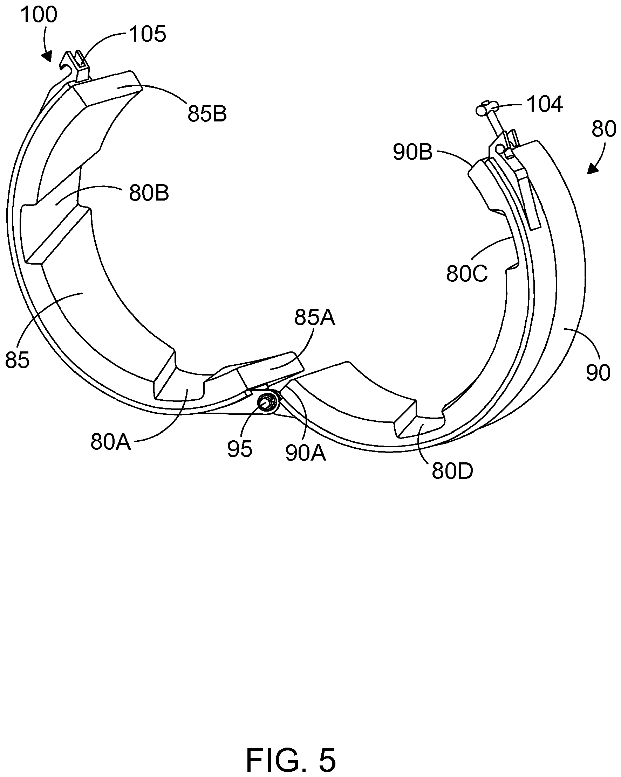

The hinged end ring 80 is shown in more detail in Figure 5 in an open position. As depicted, hinged end ring 80 is formed from two semi-circular parts 85, 90 which are permanently connected at their first ends 85A, 90A by a hinge 95. At the second ends 85B, 90B of the semi-circular parts 85, 90 there is provided a releasable connection 100. The releasable connection 100 is in the form of a hinged t-piece 104 provided at second end 90B which engages a u-shaped receptacle 105 on second end 85B. However, other such releasable connections are possible. The hinged end ring 80 is coated with pliant material such as a silicone, a rubber or any other appropriate material.

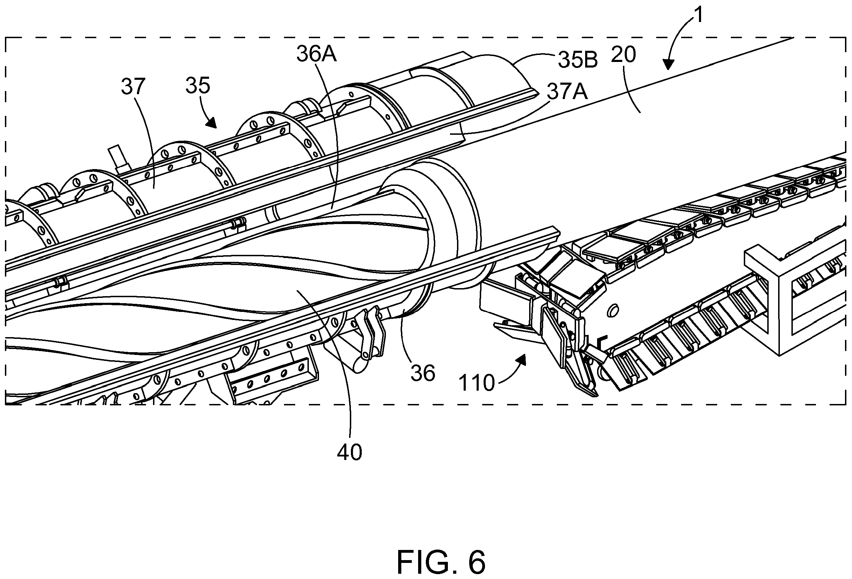

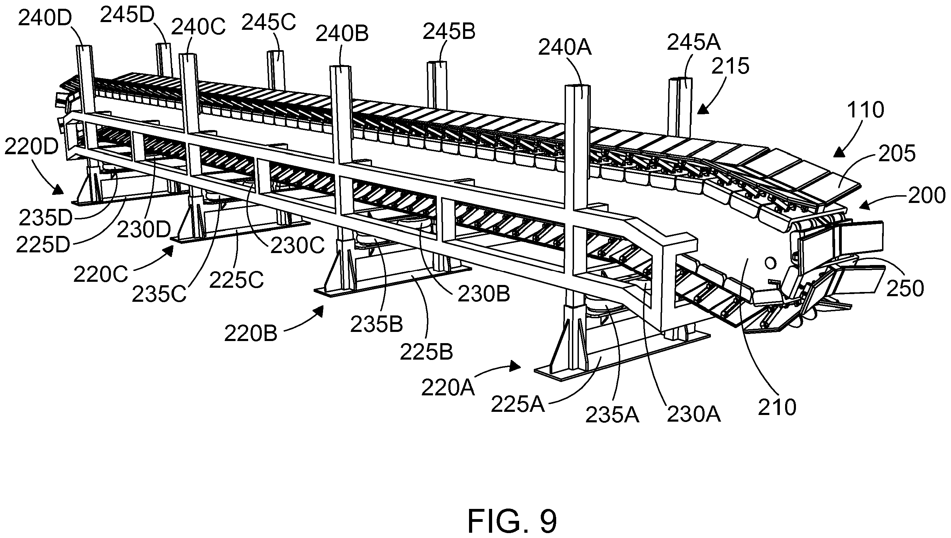

Figure 6 shows a close-up view of the second end 35B of mould 35, ie that adjacent to the section of pipeline 1 to which the outer coating 20 has previously been applied. The internal surfaces 36A, 37A of lower and upper jaws 36, 37 are formed from the same material as the hinged end ring 80. The previously coated section of pipeline 1 is shown resting on pipe conveyor 110 (labelled in Figure 6), which will be described in more detail below in relation to Figure 9.

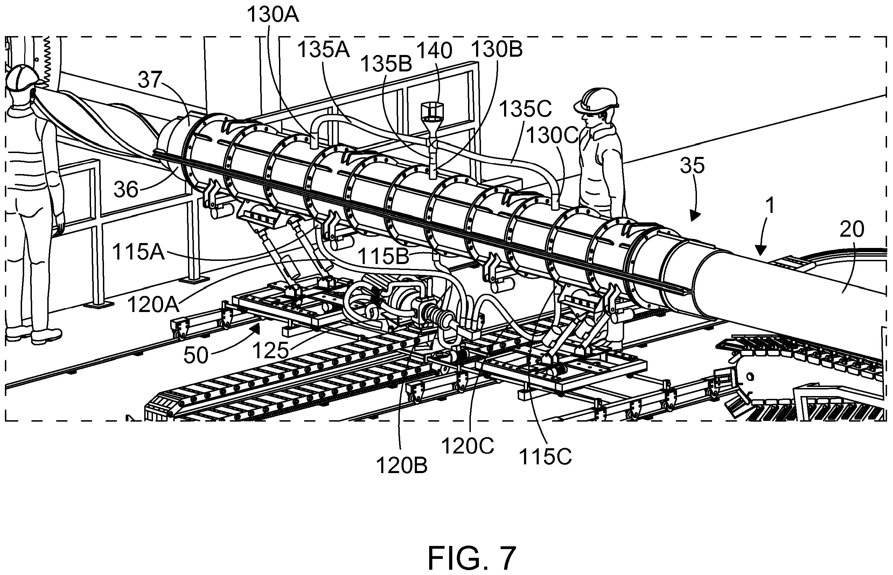

Figure 7 then shows the mould 35 in its closed position with the outer coating 20 being applied to the uncoated section of pipe 40. Lower jaw 36 is provided with inlets 115A, 115B, 115C which are connected via pipes 120A, 120B, 120C to a pump 125 which injects the thermoset polymer into the void between the internal surfaces 36A, 37A (not visible in Figure 8) of lower and upper jaws 36, 37 and uncoated section of pipe 40. The thermoset polymer is injected until the void is completely filled. A seal is provided at the first end 35A of mould 35 by hinged end ring 80 (not visible in Figure 8), and at the second end 35B by the previously coated section of pipeline 1. Upper jaw 37 is provided with outlets 130A, 130B, 130C which are connected via pipes 135A, 135B, 135C to vent 140. These outlets 130A, 130B, 130C allow air to escape from the void as the thermoset material is pumped in. The thermoset material is then left to cure. The curing step may include the application of heat by the heaters which are integral to upper and lower jaws 36, 37. The heaters may heat the thermoset material to a temperature of 25°C to 80°C. The curing step is completed as long as the thermoset material can be released from the mould and handled. The curing time is generally twice the gel time. The gel time is for example of 2 minutes to 7 minutes.

Following curing, the lower and upper jaws 36, 37 of the mould 35 are opened and lowered to reveal the newly coated section of pipeline 1. The pipes 120A, 120B, 120C and 135A, 135B, 135C, as well as vent 140, are removed, as is the hinged end ring 80. The CAM 25 has been retracted in a direction opposite to the direction of travel of the pipeline 1 during manufacture. This is so that the CAM 25 can grip a further uncoated section 40 of the pipeline in order to advance the pipeline 1 in the direction of arrow A.

The process of Figures 2-4 and 6-7 can then be repeated as many times as is needed to provide the required coating 20 to the pipeline 1.

Figure 8 shows the trolley 50 and mould 35 in isolation and in more detail. Again, not all of the components used in the method are labelled in all Figures. However, the same components are present throughout. Trolley 50 is also provided with wheels 55 which are mounted in four rows 60A, 60B, 60C and 60D. The powered cat track 45 is positioned centrally in respect of the four rows 60A, 60B, 60C, 60D (60D not shown), between rows 60B and 60C. Each row of wheels 60A, 60B, 60C and 60D engages a respective rail 65A, 65B, 65C and 65D as described above.

Hinges 145A, 145B, 145C, 145D are provided on the external surface of mould 35 at the junction between lower and upper jaws 36, 37. Linear actuators 150A, 150B comprising pistons are also provided on the external surface of mould 35 in order to produce sufficient force to move the lower and upper jaws 36, 37 between the open and closed positions. The number of linear actuators depends on the force required to open and close the mould 35. In this example, mould 35 comprises four actuators. As depicted in this Figure, towards its first end 35A the mould 35 narrows via a chamfered section 155 to a section of reduced circumference 160 which, in use, engages the hinged end ring 80. Also shown in Figure 8 are two of the inlets 115A, 115B and two of the outlets 130A, 130B.

The trolley comprises four rows of wheels 60A, 60B, 60C, 60D. Each row comprises five wheels 55 arranged in a linear fashion, one behind the other, which are mounted on a linear beams 165A, 165B, 165C, 165D. Transverse bars 170 provide a perpendicular connection between the beams 165A, 165B, 165C, 165D.

Mounted on top of the linear beams 165A, 165B, 165C, 165D and transverse bars 170 are two actuator frames 175A, 175B. Each actuator frame 175A, 175B is connected to the mould 35 via two diagonally mounted linear actuators, 180A, 185A for frame 175A, and 180B, 185B for frame 175B. The linear actuators 180A, 185A, 180B, 185B are also in the form of pistons, and they allow the vertical position of the mould 35 to be adjusted. As shown in Figure 8 in relation to frame 175A, each actuator frame 175A, 175B is mounted on two linear bearings 190A, 195A and 190B, 195B respectively, the bearings extending in a direction parallel to the major axis C of the mould 35. Thus, the actuator frames 175A, 175B are able to slide along the major axis C of the mould 35 as the pistons of the linear actuators 180A, 185A, 180B, 185B are extended and compressed. The actuator frames 175A, 175B can therefore move relative to the linear beams 165A, 165B, 165C, 165D and transverse bars 170 which are in fixed relative positions.

The pipe conveyor 110 is shown in more detail in Figure 9. The conveyor 110 helps to move the pipeline 1 in direction A after a section 40 has been coated. As shown in Figure 9, the conveyor 110 comprises an endless track 200 upon which are mounted multiple pipe contacting pads 205. The track 200 is mounted on a chassis 210 which is attached to a supporting frame 215. The supporting frame 215 comprises four vertical supports 220A, 220B, 220C, 220D.

Each vertical support comprises at its lower end a foot 225A, 225B, 225C, 225D for supporting the conveyor on the floor, as well as a pair of bellows 230A, 235A, 230B, 235B, 230C, 235C, 230D, 235D to assist in maintaining an even pressure on the pipeline by the pipe contacting pads 205. At its upper end, each vertical support comprises two opposing pipe keepers 240A, 245A, 240B, 245B, 240C, 245C, 240D, 245D in the form of posts which extend upwards on either side of the track 200. In this way, movement of the pipeline 1 on the conveyor 110 in a direction perpendicular to direction A can be limited.

The endless track 200 comprises a drive chain 250 upon which the pipe contacting pads 205 are mounted. Either side of the drive chain 250 are conveyor roller tracks which engage the pipe contacting pads 205 as they travel around the endless track 200.

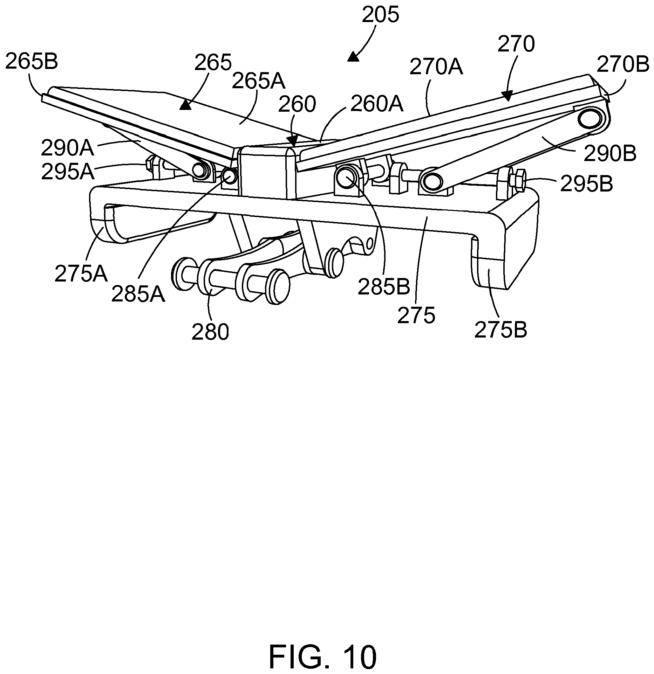

Figure 10 shows the structure of a single pipe contacting pad 205. Each pad comprises a central bar 260 and two opposing adjustable wings 265, 270. Each of these components has an upper, pipeline contacting, surface, 260A, 265A, 270A, which is coated with a pliant material, for example polyurethane. The central bar 260 and adjustable wings 265, 270 are mounted on a shoe 275 which is connected via fixture 280 to the drive chain 250 (not shown). The shoe 275 also comprises perpendicularly extending aligners 275A, 275B which help to maintain the pad 205 in position on the track 200.

The two opposing adjustable wings 265, 270 are each provided with a hinged connection 285A, 285B to the shoe 275 adjacent to the central bar 260. At their distal ends 265B, 270B, each wing 265, 270 is connected to the shoe 275 via an arm 290A, 290B whose position is adjustable via screw 295A, 295B. Thus, the distal ends 265B, 270B of wings 265, 270 can be raised and lowered. Figures 19A and 19B show end-on views of the pipe conveyor 110 with the distal ends 265B, 270B of wings 265, 270 of each pad 205 in lowered and raised positions respectively. This position is chosen depending upon the requirements of the pipeline that is being transported by the conveyor 110.

## Claims

1. A method of manufacturing a pipeline (1) for subsea transportation of oil and gas, the method comprising the steps of:
(a) providing a metallic pipe (5) having an external surface, optionally having an intermediate layer (10) formed on the external surface, the metallic pipe (5) having a plurality of electrical cables (15A, 15B, 15C, 15D) located on its external surface or on the intermediate layer (10) when present,
(b) applying a first coating (20) of a thermoset material to a section of the metallic pipe (5) to form a coated section of the metallic pipe (5), and
(c) applying a first coating (20) of a thermoset material to a further section of the metallic pipe (5), wherein the coating (20) is applied such that it overlaps with or abuts the previously coated section of the metallic pipe (5),
wherein the plurality of electrical cables (15A, 15B, 15C, 15D) are wound helically around the external surface of the metallic pipe (5) or the intermediate layer (10) when present,
wherein step (b) comprises providing a mould (35) for applying the thermoset material, closing the mould (35) around the section of metallic pipe (5) to be coated, and injecting the thermoset material into the mould (35) to coat the section of metallic pipe (5) with the thermoset material,
wherein, when the mould (35) is closed around the section of metallic pipe (5) to be coated, the mould comprises first (35B) and second (35A) open ends which surround the metallic pipe (5), and substantial sealing of the open ends (35B, 35A) is provided at a first end (35B) by a section of metallic pipe to which the thermoset coating has already been applied and at a second end (35A) by a sealing ring (80) placed around the metallic pipe (5), and
wherein the sealing ring (80) has an internal, metallic pipe facing, surface in which are formed grooves (80A, 80B, 80C, 80D) which are shaped to accept the plurality of electrical cables 15A, 15B, 15C, 15D) on the external surface of the metallic pipe (5) or on the intermediate layer (10) when present.

2. A method as claimed in claim 1, wherein step (b) additionally comprises applying a second coating of thermoset material to the coated section of the metallic pipe (5).

3. A method as claimed in either claim 1 or claim 2, wherein step (c) is repeated in order to coat a plurality of sections of the metallic pipe (5) with the thermoset material.

4. A method as claimed in any one of the preceding claims , wherein step (b) additionally comprises, after injecting the thermoset material into the mould (35), removing the mould (35), moving the coated section of metallic pipe (5) longitudinally with respect to the mould (35), and then repeating step (b) on a further section of metallic pipe (5) to be coated.

5. A method as claimed in any one of the preceding claims, wherein step (b) additionally comprises, after injecting the thermoset material into the mould (35), curing the thermoset material.

6. A method as claimed in any one of the preceding claims, wherein the metallic pipe (5) has a length greater than 24 metres.

7. A method as claimed in any one of the preceding claims, wherein the sealing ring (80) comprises a hinge (95) and a closable opening (100) such that the sealing ring (80) can be opened for attachment to and removal from the metallic pipe (5).

## Patentansprüche

1. Ein Verfahren zum Herstellen einer Rohrleitung (1) für den Unterseetransport von Öl und Gas, wobei das Verfahren die folgenden Schritte beinhaltet:
(a) Bereitstellen eines Metallrohrs (5), das eine Außenoberfläche aufweist und optional eine auf der Außenoberfläche gebildete Zwischenschicht (10) aufweist, wobei das Metallrohr (5) eine Vielzahl von Elektrokabeln (15A, 15B, 15C, 15D) aufweist, die auf seiner Außenoberfläche oder auf der Zwischenschicht (10), wenn vorhanden, angeordnet sind,
(b) Aufbringen einer ersten Beschichtung (20) aus einem Duroplastmaterial auf einen Abschnitt des Metallrohrs (5), um einen beschichteten Abschnitt des Metallrohrs (5) zu bilden, und
(c) Aufbringen einer ersten Beschichtung (20) aus einem Duroplastmaterial auf einen weiteren Abschnitt des Metallrohrs (5), wobei die Beschichtung (20) derart aufgebracht wird, dass sie den zuvor beschichteten Abschnitt des Metallrohrs (5) überlappt oder daran anstößt,
wobei die Vielzahl von Elektrokabeln (15A, 15B, 15C, 15D) spiralförmig um die Außenoberfläche des Metallrohrs (5) oder die Zwischenschicht (10), wenn vorhanden, gewickelt sind,
wobei Schritt (b) das Bereitstellen eines Formwerkzeugs (35) zum Aufbringen des Duroplastmaterials, das Schließen des Formwerkzeugs (35) um den zu beschichtenden Abschnitt des Metallrohrs (5) und das Spritzen des Duroplastmaterials in das Formwerkzeug (35), um den Abschnitt des Metallrohrs (5) mit dem Duroplastmaterial zu beschichten, beinhaltet,
wobei, wenn das Formwerkzeug (35) um den zu beschichtenden Abschnitt des Metallrohrs (5) geschlossen ist, das Formwerkzeug ein erstes (35B) und ein zweites (35A) offenes Ende beinhaltet, die das Metallrohr (5) umgeben, und ein wesentliches Abdichten der offenen Enden (35B, 35A) an einem ersten Ende (35B) von einem Abschnitt des Metallrohrs, auf das die Duroplastbeschichtung bereits aufgebracht worden ist, und an einem zweiten Ende (35A) von einem um das Metallrohr (5) platzierten Dichtring (80) bereitgestellt wird, und
wobei der Dichtring (80) eine innere, dem Metallrohr zugewandte Oberfläche aufweist, in der Rillen (80A, 80B, 80C, 80D) gebildet sind, die gestaltet sind, um die Vielzahl von Elektrokabeln (15A, 15B, 15C, 15D) auf der Außenoberfläche des Metallrohrs (5) oder auf der Zwischenschicht (10), wenn vorhanden, aufzunehmen.

2. Verfahren gemäß Anspruch 1, wobei Schritt (b) zusätzlich das Aufbringen einer zweiten Beschichtung aus Duroplastmaterial auf den beschichteten Abschnitt des Metallrohrs (5) beinhaltet.

3. Verfahren gemäß entweder Anspruch 1 oder Anspruch 2, wobei Schritt (c) wiederholt wird, um eine Vielzahl von Abschnitten des Metallrohrs (5) mit dem Duroplastmaterial zu beschichten.

4. Verfahren gemäß einem der vorhergehenden Ansprüche, wobei Schritt (b), nach dem Spritzen des Duroplastmaterials in das Formwerkzeug (35), zusätzlich Folgendes beinhaltet: Entfernen des Formwerkzeugs (35), Verschieben des beschichteten Abschnitts des Metallrohrs (5) in Längsrichtung in Bezug auf das Formwerkzeug (35) und dann Wiederholen von Schritt (b) an einem weiteren Abschnitt des zu beschichtenden Metallrohrs (5).

5. Verfahren gemäß einem der vorhergehenden Ansprüche, wobei Schritt (b), nach dem Spritzen des Duroplastmaterials in das Formwerkzeug (35), zusätzlich das Aushärten des Duroplastmaterials beinhaltet.

6. Verfahren gemäß einem der vorhergehenden Ansprüche, wobei das Metallrohr (5) eine Länge von mehr als 24 Metern aufweist.

7. Verfahren gemäß einem der vorhergehenden Ansprüche, wobei der Dichtring (80) ein Gelenk (95) und eine schließbare Öffnung (100) beinhaltet, sodass der Dichtring (80) zum Anbringen an und Entfernen von dem Metallrohr (5) geöffnet werden kann.

## Revendications

1. Un procédé de fabrication d'un pipeline (1) pour le transport sous-marin de pétrole et de gaz, le procédé comprenant les étapes consistant à :
(a) fournir un tuyau métallique (5) ayant une surface externe, ayant facultativement une couche intermédiaire (10) formée sur la surface externe, le tuyau métallique (5) ayant une pluralité de câbles électriques (15A, 15B, 15C, 15D) situés sur sa surface externe ou sur la couche intermédiaire (10) lorsqu'elle est présente,
(b) appliquer un premier revêtement (20) d'un matériau thermodurcissable sur une section du tuyau métallique (5) pour former une section revêtue du tuyau métallique (5), et
(c) appliquer un premier revêtement (20) d'un matériau thermodurcissable à une autre section du tuyau métallique (5), le revêtement (20) étant appliqué de sorte qu'il chevauche ou bute contre la section préalablement revêtue du tuyau métallique (5),
dans lequel les câbles de la pluralité de câbles électriques (15A, 15B, 15C, 15D) sont enroulés en hélice autour de la surface externe du tuyau métallique (5) ou de la couche intermédiaire (10) lorsqu'elle est présente,
dans lequel l'étape (b) comprend la fourniture d'un moule (35) pour appliquer le matériau thermodurcissable, la fermeture du moule (35) autour de la section de tuyau métallique (5) à revêtir, et l'injection du matériau thermodurcissable dans le moule (35) pour revêtir la section de tuyau métallique (5) avec le matériau thermodurcissable,
dans lequel, lorsque le moule (35) est fermé autour de la section de tuyau métallique (5) à revêtir, le moule comprend des première (35B) et deuxième (35A) extrémités ouvertes qui entourent le tuyau métallique (5), et une étanchéité substantielle des extrémités ouvertes (35B, 35A) est prévue à une première extrémité (35B) par une section de tuyau métallique sur laquelle le revêtement thermodurcissable a déjà été appliqué et à une seconde extrémité (35A) par un anneau d'étanchéité (80) placé autour du tuyau métallique (5), et
dans lequel l'anneau d'étanchéité (80) a une surface interne faisant face au tuyau métallique, dans laquelle sont formées des rainures (80A, 80B, 80C, 80D) qui sont formées pour accepter la pluralité de câbles électriques 15A, 15B, 15C, 15D) sur la surface externe du tuyau métallique (5) ou sur la couche intermédiaire (10) lorsqu'elle est présente.

2. Un procédé tel que revendiqué dans la revendication 1, dans lequel l'étape (b) comprend en outre l'application d'un deuxième revêtement de matériau thermodurcissable sur la section revêtue du tuyau métallique (5).

3. Un procédé tel que revendiqué dans soit la revendication 1, soit la revendication 2, dans lequel l'étape (c) est répétée afin de revêtir une pluralité de sections du tuyau métallique (5) avec le matériau thermodurcissable.

4. Un procédé tel que revendiqué dans l'une quelconque des revendications précédentes, dans lequel l'étape (b) comprend en outre, après injection du matériau thermodurcissable dans le moule (35), le retrait du moule (35), le déplacement de la section revêtue de tuyau métallique (5) longitudinalement par rapport au moule (35), puis la répétition de l'étape (b) sur une autre section de tuyau métallique (5) à revêtir.

5. Un procédé tel que revendiqué dans l'une quelconque des revendications précédentes, dans lequel l'étape (b) comprend additionnellement, après injection du matériau thermodurcissable dans le moule (35), le durcissement du matériau thermodurcissable.

6. Un procédé tel que revendiqué dans l'une quelconque des revendications précédentes, dans lequel le tuyau métallique (5) a une longueur supérieure à 24 mètres.

7. Un procédé tel que revendiqué dans l'une quelconque des revendications précédentes, dans lequel l'anneau d'étanchéité (80) comprend une charnière (95) et une ouverture apte à être fermée (100) de sorte que l'anneau d'étanchéité (80) peut être ouvert pour être fixé au tuyau métallique (5) et retiré de celui-ci.
